Europäisches Patentamt

European Patent Office

Office européen des brevets

(19)

(11)   **EP 1 217 348 A1**

## (12)   DEMANDE DE BREVET EUROPEEN

(43) Date de publication:
**26.06.2002 Bulletin 2002/26**

(51) Int Cl.$^7$: **G01K 7/13**, G01J 5/16

(21) Numéro de dépôt: **01128890.9**

(22) Date de dépôt: **05.12.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **19.12.2000 FR 0016568**

(71) Demandeur: **VALEO CLIMATISATION
78321 La Verrière (FR)**

(72) Inventeur: **Huynh, Tan Duc
93330 Neuilly s/Marne (FR)**

(74) Mandataire: **Gérard, Michel et al
Valéo Climatisation,
8, rue Louis-Lormand
78321 La Verrière (FR)**

(54)   **Procédé de mesure mettant en oeuvre une compensation thermique d'une thermopile et dispositif pour sa mise en oeuvre**

(57)    L'invention concerne un procédé de compensation thermique d'une thermopile disposée dans un boîtier de capteur, caractérisé en ce qu'il met en oeuvre :

a) la génération d'une première tension $U_1$ qui est fonction d'une température objet $T_{obj}$, et d'une température $T_{th}$ du boîtier (2) de capteur, et d'une deuxième tension $U_2$ qui est proportionnelle à la température $T_{th}$ du boîtier de capteur.
b) la conversion analogique-numérique de la première tension $U_1$ et de la deuxième tension $U_2$.
c) le calcul de la température objet $T_{obj}$ à partir desdites tensions $U_1$ et $U_2$ numérisées.

FIG.1

EP 1 217 348 A1

**Description**

La présente invention a pour objet un procédé de mesure mettant en oeuvre une compensation thermique d'une thermopile ainsi qu'un dispositif pour sa mise en oeuvre.

La compensation thermique de ce type de composant est généralement réalisée à l'aide de composants discrets en relation avec plusieurs amplificateurs opérationnels.

Une telle compensation analogique n'est possible que dans une plage étroite de température (10°C à 40°C par exemple). La présence de plusieurs amplificateurs opérationnels induit des tolérances larges, d'où une imprécision de la mesure.

L'idée de base de l'invention est de s'affranchir au moins en partie de ces contraintes, par mise en oeuvre d'une compensation numérique.

L'invention concerne ainsi un procédé de mesure mettant en oeuvre une compensation thermique d'un ensemble thermopile disposé dans un boîtier de capteur et comportant une thermopile et une thermistance, caractérisé en ce qu'il met en oeuvre :

a) la génération d'une première tension $U_1$ de thermopile qui est fonction d'une température objet $T_{obj}$ à mesurer, et d'une température $T_{th}$ du boîtier de capteur, et d'une deuxième tension $U_2$ de thermistance qui est proportionnelle à la température $T_{th}$ du boîtier de capteur.

b) la conversion analogique-numérique de la première tension $U_1$ et de la deuxième tension $U_2$.

c) le calcul de la température objet $T_{obj}$ à partir desdites tensions $U_1$ et $U_2$ numérisées.

Le procédé peut être caractérisé en ce que $T_{obj}$ est obtenu à partir de la formule suivante :

$$U_1 = \frac{K_3}{T_{th}^3} \int_{\lambda \min}^{\lambda \max} \frac{C_1 \lambda^{-5}}{\exp(C_2/\lambda Tobj) - 1} \, d\lambda$$

avec :

- $K_3$ : constante
- $C_1$, $C_2$ : constantes de la loi de Planck
- $\lambda$ : longueur d'onde du rayonnement électromagnétique
- $\lambda\min$, $\lambda \max$ : borne d'un filtre infra-rouge du capteur

$T_{obj}$ peut être obtenu à partir d'un tableau de valeurs faisant correspondre à des valeurs de $U_1$ et $U_2$ des valeurs de $T_{obj}$ selon une cartographie à deux dimensions.

Selon un mode de réalisation préféré, le procédé est caractérisé en ce qu'il met en oeuvre une compensation de tolérances pour déterminer une valeur comprise corrigée $T'_{obj}$ à partir de $T_{obj}$, selon la formule :

$$T'_{obj} = A \, T_{obj} + B$$

A, et B correspondant à des termes de correction de gain et de décalage de zéro mémorisés lors d'un étalonnage de l'ensemble thermopile en fabrication.

L'invention concerne également un dispositif pour la mise en oeuvre du procédé défini ci-dessus, caractérisé en ce qu'il comporte :

- un circuit électronique ayant des entrées connectées à deux bornes de l'ensemble thermopile pour fournir en sortie une dite première tension $U_1$ et une dite deuxième tension $U_2$.
- un microprocesseur mémorisant une relation entre lesdites première et deuxième tension $U_1$ et $U_2$ et la température objet $T_{obj}$.

Le dispositif peut être caractérisé en ce que le microprocesseur comporte également un module de compensation de tolérance, pour déterminer une valeur corrigée T'obj à partir de la température objet $T_{obj}$ selon la formule

$$T'_{obj'} = A\, T_{obj} + B.$$

A et B correspondent à des termes de correction de gain et de décalage de zéro mémorisées lors d'une étalonnage de l'ensemble thermopile en fabrication.

Selon un mode de réalisation préféré, le dispositif est caractérisé en ce qu'il comporte :

- un pont diviseur de polarisation d'une borne de l'ensemble thermopile couplée à une borne d'une thermistance associée à la thermopile, ladite borne délivrant ladite deuxième tension $U_2$.
- un amplificateur opérationnel pour amplifier la tension auxdites bornes de l'ensemble thermopile et produisant en sortie ladite première tension $U_1$.

D'autres caractéristiques et avantages de l'invention apparaîtront mieux à la lecture de la description ci-après, en liaison avec les dessins annexés, dans lesquels :

- la figure 1 est un schéma synoptique de mise en oeuvre de l'ivention ;
- la figure 2 représente un mode de réalisation préféré de l'invention ;
- la figure 3 illustre une cartographie représentant $T_{obj}$ en fonction de $U_1$ et $U_2$, la figure 4 étant un exemple de cartographie de la figure 3.
- et la figure 5 illustre une compensation de gain et de décalage de zéro pour la mesure de température.

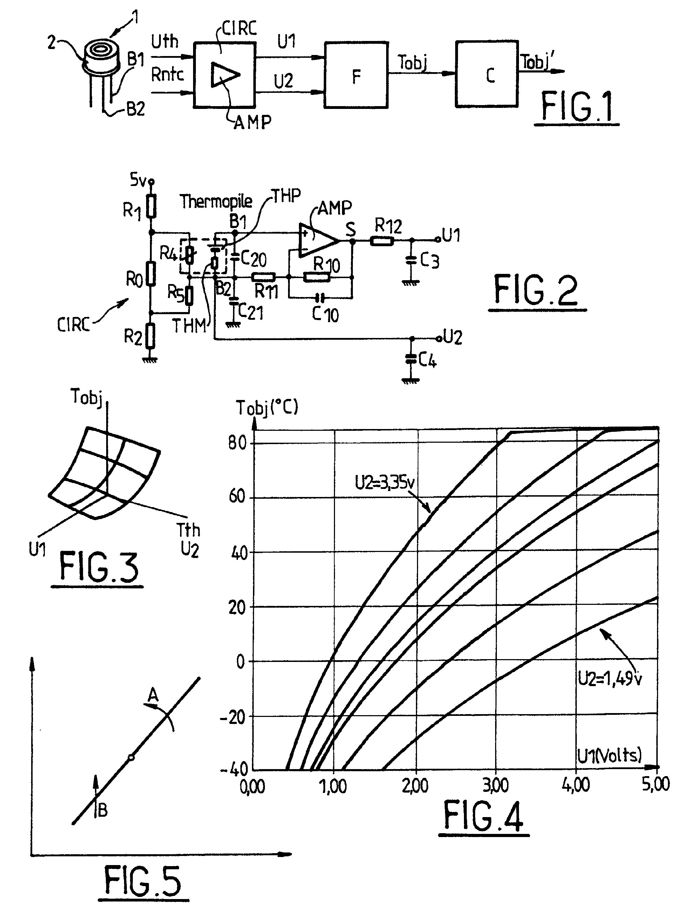

Comme illustré à la figure 1, un descriptif selon l'invention présente un ensemble thermopile 1 qui fournit à deux bornes actives B1 et B2 des tensions respectivement $U_{th}$ et $R_{nte}$. A l'intérieur du boîtier 2 de l'ensemble thermopile 1 sont montés en série un composant THP constituant une thermopile au sens strict dont une borne est la borne B1 et une thermistance THM, dont une borne est la borne B2 (figure 2). Un circuit CIRC présentant un amplificateur opérationnel AMP fournit à ses sorties des tensions $U_1$ et $U_2$ avantageusement calibrées entre OV et 5V, et ces tensions sont appliquées à des entrées analogiques d'un dispositif à microprocesseur F ou elles sont numérisées et traitées pour fournir en sortie un signal numérique représentant la température à mesurer $T_{obj}$, ou bien une température mesurée corrigée $T'_{obj}$ (après compensation dans un module de calcul C).

Comme le montre la figure 2, la borne B1 de l'ensemble thermopile 1 est connectée à l'entrée non inverseuse de l'amplificateur AMP dont la sortie S, filtrée par un réseau ($R_{12}$, $C_3$) fournit une tension $U_1$ (par exemple $R_{12} = 10$ kΩ; $C_3 = 10$ nF). La borne B2 de l'ensemble thermopile 1 est connectée à une borne d'une résistance $R_{11}$, dont l'autre borne est connectée à l'entrée inverseuse de l'amplificateur AMP. La résistance $R_{11}$ et une résistance $R_{10}$ définissent le gain G de l'amplificateur AMP (par exemple G = 1000 ; $R_{10} = 267$ kΩ; $R_{11} = 267$ Ω). Un condensateur $C_{10}$ (par exemple $C_{10} = 10$ nF) est connecté aux bornes de la résistance $R_{10}$.

On notera également les condensateurs C20 et C21 de valeur sensiblement égale (par exemple 10 nF) montés en pont entre $B_1$, $B_2$ et la masse.

La borne B2 est alimentée à partir d'une source de tension V (par exemple V = 5 volts) à travers un double pont présentant les résistances $R_1$, $R_0$, et $R_2$ (par exemple : $R_1 = R_2 = 511$ Q et $R_0 = 750$ Ω) et les résistances $R_4$ et $R_5$ en parallèle avec $R_0$ (avec par exemple R4 = R5 = 10 kΩ), R4 étant une résistance variable, notamment intégrée à la thermopile 1.

L'amplificateur opérationnel AMP présente de préférence un décalage de zéro (ou « offset ») inférieur à 10 µV et une réjection en mode commun supérieure à 130 dB. Pour les résistances, on utilise de préférence des éléments de classe de précision 1 %.

La tension U1 disponible à la sortie S de l'amplificateur AMP, après filtrage éventuel par ($R_{12}$, $C_3$), est en première approximation proportionnelle à la température $T_{obj}$ de l'objet à mesurer et inversement proportionnelle à la température $T_{th}$ du boîtier 2 de la thermopile 1.

Quant à la tension U2, elle est en première approximation proportionnelle à la température $T_{th}$ du boîtier 2 du capteur 1 (ceci est dû à la présence de la thermistance THM qui est en contact thermique avec le boîtier 2 du capteur 1), d'où $T_{th} = K_4\, U2$.

Un calcul précis peut être réalisé de la manière suivante :

La tension U1 représente l'équilibre thermique entre deux phénomènes physiques :

a- Energie reçue en provenance de l'extérieur du capteur via le filtre IR:
D'après la loi de Planck :

$$U1 = \int_{\lambda\,min}^{\lambda\,max} K1 \; \frac{C_1 \lambda^{-5}}{-1 + e^{\left(\frac{C2}{\lambda\,Tobj}\right)}} \; g(\lambda) d\lambda$$

$\lambda$min et $\lambda$max sont les bornes en longueur d'onde respectivement inférieure et supérieure du filtre infra-rouge IR.

$g(\lambda)$ est la réponse du capteur entre $\lambda$min et $\lambda$max,

$C_1$ et $C_2$ sont les constantes de Planck,

$K_1$ est une constante.

b - Echange par radiation avec l'extérieur (Perte par rayonnement, optimum de sensibilité).

L'énergie est proportionnelle à l'écart entre la température $T_{th}$ du boîtier 2 et la température $T_{gr}$ de l'élément thermopile

$K_2(Tgr^4 - Tth^4)$

A l'équilibre, la tension délivrée par la thermopile vaut :

$$U1 = \frac{K_3}{T_{th}^{\,3}} \int_{\lambda\,min}^{\lambda\,max} \frac{C_1 \lambda^{-5}}{-1 + e^{\left(\frac{C_2}{\lambda T_{obj}}\right)}} \, d\lambda$$

$K_3$ est une constante.

On déduit par calcul la température de l'objet Tobj de la formule précédente.

On peut mémoriser les résultats selon une cartographie à deux dimensions (voir figures 3 et 4), donnant Tobj en fonction de la tension U1 et de la tension U2 (ou de Tth), mémorisée sous forme de tableau de valeurs, par exemple dans une mémoire morte ou une mémoire flash. A la figure 4, U1 est donné en fonction de Tobj pour des valeurs de U2 variant entre 1,49 V et 3,35 V.

Il est possible également de tenir compte d'une compensation de décalage de zéro et de gain pour réduire la dispersion entre les ensembles thermopile. A cet effet, des coefficients A d'écart de gain et B de décalage de zéro sont mémorisés lors de l'étalonnage des thermopiles 1 en fabrication.

A correspond donc à un coefficient multiplication à appliquer (voir figure 5) pour retrouver le gain nominal recherché $A_0$. On déduit alors une température corrigée :

T'obj = ATobj + B

**Revendications**

1.  Procédé de mesure mettant en oeuvre une compensation thermique d'un ensemble thermopile disposé dans un boîtier de capteur et comportant une thermopile et une thermistance, **et mettant** en oeuvre :

a) la génération d'une première tension $U_1$ de thermopile qui est fonction d'une température objet $T_{obj}$, et d'une température $T_{th}$ du boîtier de capteur, et d'une deuxième tension $U_2$ de thermistance qui est proportionnelle à la température $T_{th}$ du boîtier de capteur.
b) la conversion analogique-numérique de la première tension $U_1$ et de la deuxième tension $U_2$.
c) le calcul de la température objet $T_{obj}$ à partir desdites tensions $U_1$ et $U_2$ numérisées, **caractérisé en ce que** $T_{obj}$ est obtenu à partir de la formule suivante :

$$U_1 = \frac{K_3}{T_{th}^3} \int_{\lambda\,min}^{\lambda\,max} \frac{C_1 \lambda^{-5}}{\exp(C_2/\lambda\,Tobj)-1}\,d\lambda$$

avec :

- $K_3$ : constante
- $C_1$, $C_2$ : constantes de la loi de Planck
- $\lambda$ : longueur d'onde du rayonnement électromagnétique
- $\lambda min$, $\lambda\,max$ : bornes d'un filtre infra-rouge du capteur

**2.** Procédé selon la revendication 1, **caractérisé en ce que** $T_{obj}$ est obtenu à partir d'un tableau de valeurs faisant correspondre à des valeurs de $U_1$ et $U_2$ des valeurs de $T_{obj}$ selon une cartographie à deux dimensions.

**3.** Procédé selon une des revendications précédentes, **caractérisé en ce qu'**il met en oeuvre une compensation de tolérances pour déterminer une valeur corrigée $T'_{obj}$ à partir de $T_{obj}$, selon la formule :

$$T'_{obj} = A\,T_{obj} + B$$

A, et B correspondant à des termes de correction de gain et de décalage de zéro mémorisés lors d'un étalonnage de la thermopile en fabrication.

**4.** Dispositif pour la mise en oeuvre du procédé selon une des revendications précédentes, **caractérisé en ce qu'**il comporte :

- un circuit électronique (CIRC) ayant des entrées connectées à deux bornes de la thermopile pour fournir en sortie une dite première tension $U_1$ et une dite deuxième tension $U_2$.
- un microprocesseur (F) mémorisant une relation entre lesdites première et deuxième tension $U_1$ et $U_2$ et la température objet $T_{obj}$.

**5.** Dispositif selon la revendication **4**, **caractérisé en ce que** le microprocesseur comporte également un module de compensation de tolérance (C), pour déterminer une valeur corrigée T'obj à partir de la température objet $T_{obj}$ selon la formule

$$T'_{obj'} = A\,T_{obj} + B$$

A et B correspondant à des termes de correction de gain et de décalage de zéro mémorisées lors d'une étalonnage de la thermopile en fabrication.

**6.** Dispositif selon une des revendications **4** ou **5**, **caractérisé en ce qu'**il comporte :

un pont diviseur de polarisation d'une borne ($B_2$) de l'ensemble thermopile couplée à une borne d'une thermistance (THM) associée à la thermopile (THP), ladite borne délivrant ladite deuxième tension $U_2$.
- un amplificateur opérationnel (AMP) pour amplifier la tension auxdites bornes ($B_1$, $B_2$) de l'ensemble thermopile (1) et produisant en sortie ladite première tension $U_1$.

FIG.1

FIG.2

FIG.3

FIG.4

FIG.5

Office européen
des brevets

**RAPPORT DE RECHERCHE EUROPEENNE**

Numéro de la demande

EP 01 12 8890

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 99 01726 A (KONINKL PHILIPS ELECTRONICS NV ;PHILIPS SVENSKA AB (SE)) 14 janvier 1999 (1999-01-14) * page 7, ligne 20 - ligne 32; figure 7 * | 1-6 | G01K7/13 G01J5/16 |
| A | US 6 047 205 A (POMPEI FRANCESCO) 4 avril 2000 (2000-04-04) * figures 8,9 * | 1-6 | |
| A | DE 34 24 288 A (WIGGER HEINZ ULRICH) 23 janvier 1986 (1986-01-23) * revendications; figures * | 1,4 | |

| | DOMAINES TECHNIQUES RECHERCHES (Int.Cl.7) |
|---|---|
| | G01K G01J |

Le présent rapport a été établi pour toutes les revendications

| Lieu de la recherche | Date d'achèvement de la recherche | Examinateur |
|---|---|---|
| LA HAYE | 15 février 2002 | Ramboer, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**          EP 01 12 8890

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

15–02–2002

| Document brevet cité au rapport de recherche | | Date de publication | Membre(s) de la famille de brevet(s) | | Date de publication |
|---|---|---|---|---|---|
| WO 9901726 | A | 14–01–1999 | WO | 9901726 A1 | 14–01–1999 |
| US 6047205 | A | 04–04–2000 | US | 5653238 A | 05–08–1997 |
| | | | US | 5325863 A | 05–07–1994 |
| | | | US | 5381796 A | 17–01–1995 |
| | | | US | 5445158 A | 29–08–1995 |
| | | | US | 5199436 A | 06–04–1993 |
| | | | US | 5012813 A | 07–05–1991 |
| | | | US | 4993419 A | 19–02–1991 |
| | | | US | 6219573 B1 | 17–04–2001 |
| | | | US | 2001027274 A1 | 04–10–2001 |
| | | | US | 5628323 A | 13–05–1997 |
| | | | US | 5873833 A | 23–02–1999 |
| | | | CA | 2004743 A1 | 06–06–1990 |
| | | | DE | 68928083 D1 | 03–07–1997 |
| | | | DE | 68928083 T2 | 02–01–1998 |
| | | | EP | 1136801 A1 | 26–09–2001 |
| | | | EP | 0447455 A1 | 25–09–1991 |
| | | | EP | 0763349 A2 | 19–03–1997 |
| | | | JP | 2809503 B2 | 08–10–1998 |
| | | | WO | 9006090 A1 | 14–06–1990 |
| | | | US | 5271407 A | 21–12–1993 |
| DE 3424288 | A | 23–01–1986 | DE | 3424288 A1 | 23–01–1986 |

EPO FORM P0460

Pour tout renseignement concernant cette annexe : voir Journal Officiel de l'Office européen des brevets, No.12/82